Europäisches Patentamt

European Patent Office

Office européen des brevets

(11) Publication number: **0 439 952 A2**

# EUROPEAN PATENT APPLICATION

(21) Application number: **90314144.8**

(51) Int. Cl.⁵: **G06F 12/08**

(22) Date of filing: **21.12.90**

(30) Priority: **31.01.90 US 473239**

(43) Date of publication of application:
**07.08.91 Bulletin 91/32**

(84) Designated Contracting States:
**DE FR GB IT**

(71) Applicant: **SGS-THOMSON MICROELECTRONICS, INC.**
**1310 Electronics Drive**
**Carrollton Texas 75006(US)**

(72) Inventor: **Daly, Alex D.**
**4416 Junction Drive**
**Plano, Texas 75075(US)**
Inventor: **Tuttle, Rickie Lynn**
**9306 Westfield Drive**
**Rowlett, Texas 75088(US)**

(74) Representative: **Palmer, Roger et al**
**PAGE, WHITE & FARRER 54 Doughty Street**
**London WC1N 2LS(GB)**

(54) **Dual-port cache tag memory.**

(57) A cache tag memory device has a dual port memory array for containing cache tags. One port, accessed by a local processor, can read from and write to the array. The other port is accessed through a global system bus, and can only read the memory array. A storage bit associated with each entry in the array is used as a valid bit. A cache tag entry match can never be made when such valid bit indicates that the entry is invalid. Both ports operate asynchronously from each other. The local port operates much like as SRAM during write and read operations. The global port always monitors the system bus, or snoops, and compares internal RAM data to the external system address. If an entry matches a system address during a system write operation, the corresponding valid bit is set to a value which indicates that the entry is invalid.

FIG. 4

## DUAL-PORT CACHE TAG MEMORY

The present invention relates generally to digital computer systems and more specifically to cache memory systems.

Cache memories are used in many computer systems to improve system performance. A cache memory is a relatively small, fast memory which resides between a central processor and main system memory. When a memory location is accessed by the central processor, the contents of that location are placed into the cache memory. Typically, several consecutive memory locations are loaded into the cache memory at one time. Whenever the processor reads the contents of a memory location which is stored in the cache memory, the time required to access such location is drastically reduced. Access of data which is stored in the cache can improve access times by factors of three to ten times.

The nature of typical programs is such that read accesses outnumber write accesses of memory locations by a factor of approximately eight or nine to one. When data is written to a memory location, it may be retained in the cache, to be written to main memory only at a later time, or it may be immediately written to main memory as well as to the cache. The former function is known as write-back, while the latter is known as write-through. With a write-through cache, even though no time is saved on a write by the central processor because the main system memory is accessed anyway, the statistics of most programs and a good cache algorithm can greatly improve system performance because of the preponderance of read operations. A good cache technique can provide a "hit ratio" of well over ninety percent, meaning that no main memory access is necessary for over ninety percent of the read operations performed.

A cache can be considered as having two types of memory. The first type is the data memory, in which the data is actually stored. The second type is known as a tag memory, or tag RAM, which is used to determine which memory locations are actually stored in the cache. In general, the cache tag RAM contains a plurality of entries corresponding to the entries of the data cache. Each entry is indexed by some number of least significant bits of the address generated by the central processor, with the tag entry itself containing the most significant bits of the memory location which is stored in the corresponding data cache entry. If the most significant bits stored in the cache tag match the most significant bits of the address currently being generated, with the least significant bits of this address acting as an index to the tag ram, a cache "hit" has occurred and the data to be read may be taken from the corresponding data cache entry. If data corresponding to the desired address is not located in the data cache, the tag entry will not match the most significant bits of the address, and a "miss" occurs. This indicates that the data must be fetched from main system memory into the data cache. At this time, the current contents of the cache tag entry are overwritten with the most significant bits of the newly fetched address.

In multi-processor systems, it is possible to provide each processor in a system with its own cache memory. Each local processor accesses its own cache whenever possible, and accesses main system memory through a system bus only when necessary.

This situation introduces an important problem known as the "cache coherency problem." This problem arises whenever it is possible for shared variables in main system memory to be accessed by two or more processors in the system. These processors can be local central processing units, or input/output devices attached to the bus. The cache coherency problem arises when a single memory location is cached in two or more local caches. If one of the processors writes a new value into that memory location, it will be inconsistent with the value of the same variable, or main memory location, currently cached in the other caches. The cache coherency problem also arises when a non-caching device writes to a location in system memory which has been cached by another device.

One approach to dealing with the cache coherency problem is to have all local processors having caches monitor, or "snoop," the main system bus at all times. If another processor or device writes data to a memory location which is currently stored in a local cache, the local cache entry must be invalidated. If that location is later accessed by the local processor, the updated value will then be fetched from the main system memory.

Current approaches to implementing this bus snooping approach are cumbersome and complex. They typically involve using two cache tag memories, one for the local processor and one for the bus snooping circuitry. Whenever changes occur to one tag memory, control circuitry updates the other cache tag so that they match at all times. This approach to maintaining the coherency of cache tags is slow, costly, and fairly complex.

It would be desirable to provide a cache tag memory device which simplifies bus snooping to maintain cache coherency. It would further be desirable to provide such a device which is relatively simple and inexpensive, and which prevents a local processor from accessing cache locations which may have been updated globally.

It is therefore an object of the present invention to provide a cache tag memory device suitable for use with multi-processor systems.

It is another object of the present invention to provide such a cache tag memory device which marks a cache entry as invalid if another device connected to a system bus writes data to the corresponding main system memory location contained within the cache subsystem.

It is a further object of the present invention to provide such a cache tag memory device which can be used to implement local caches with a minimum of complexity.

Therefore, according to the present invention, a cache tag memory device has a dual-port memory array for containing cache tags. One port, accessed by a local processor, can read from and write to the array. The other port is accessed through a global system bus, and can only read the memory array. A storage bit associated with each entry in the array is used as a valid bit. If a cache entry matches a system address during a system write operation, the dual-port cache tag memory monitors the operation, and the corresponding valid bit is set to a value which indicates that the entry is invalid. During compare cycles, a cache tag entry match can never be made when such valid bit indicates that the entry is invalid.

The novel features believed characteristic of the invention are set forth in the appended claims. The invention itself however, as well as a preferred mode of use, and further objects and advantages thereof, will best be understood by reference to the following detailed description of an illustrative embodiment when read in conjunction with the accompanying drawings, wherein:

Figure 1 is a high level block diagram of a multi-processor computer system;

Figure 2 is a block diagram of a prior art approach to maintaining cache coherency in a multi-processor system;

Figure 3 is a high level block diagram showing a cache memory utilizing a cache tag memory device according to the present invention;

Figure 4 is more detailed block diagram of a preferred cache tag memory device;

Figure 5 is a block diagram of a preferred cache tag memory device illustrating a greater degree of detail;

Figure 6 is a table indicating operation of collision detect circuitry as shown in Figure 5; and

Figure 7 is a schematic diagram of two preferred cache tag memory devices connected so as to provide a cache tag memory having larger tag field entries than provided by a single device.

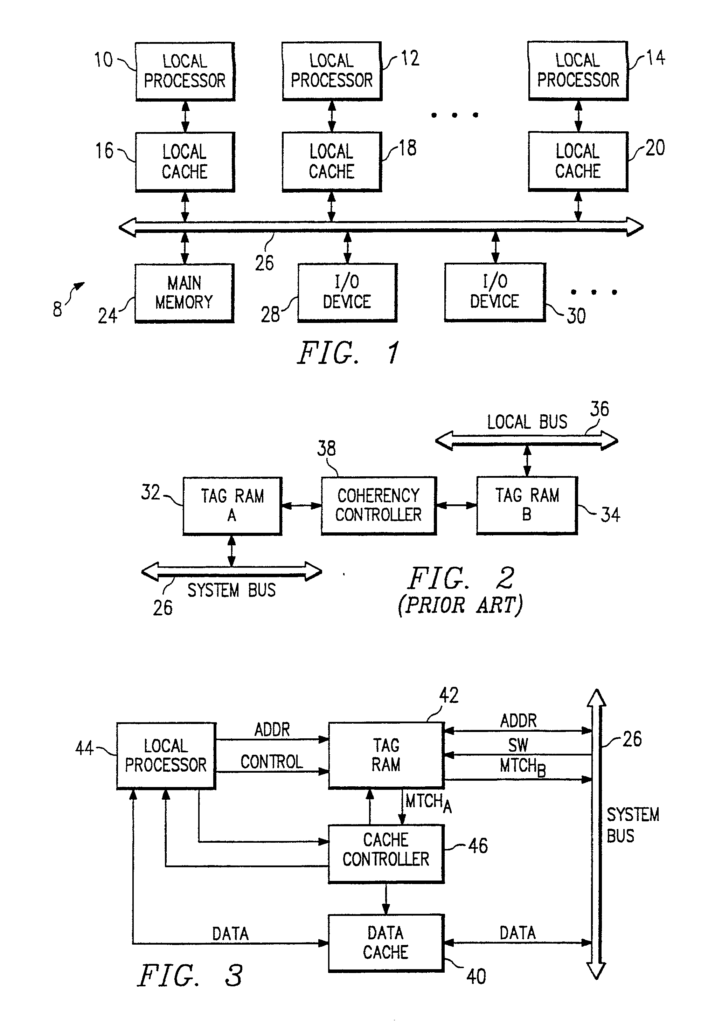

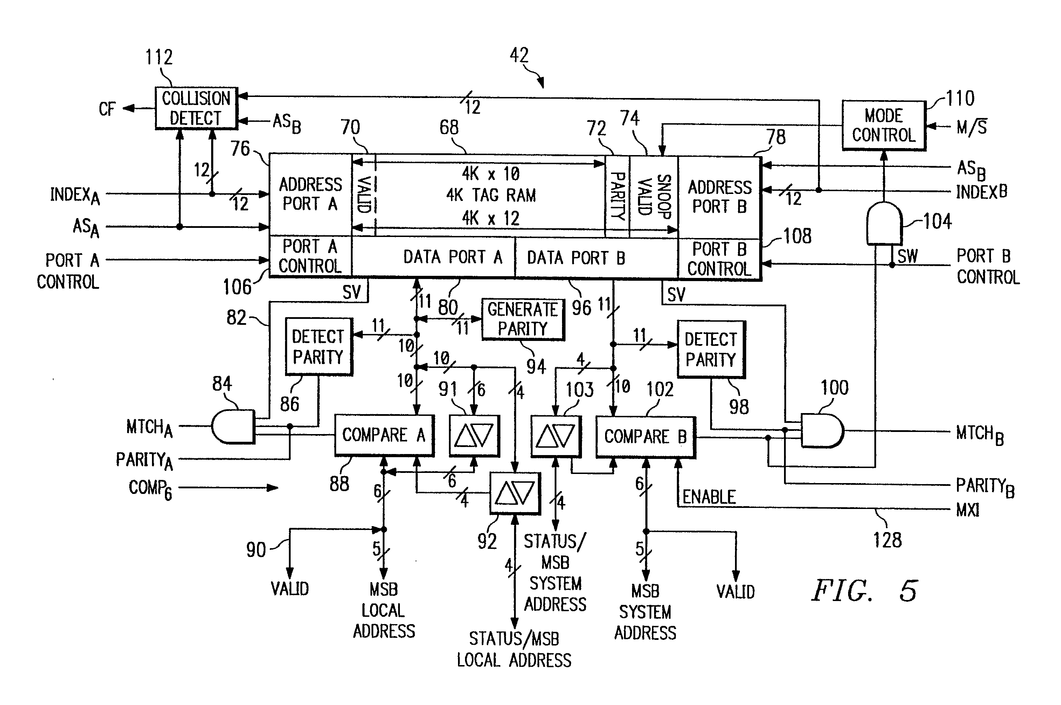

Referring to Figure 1, a multi-processor computer system is referred to generally with reference number 8. Local processors 10,12, 14 are each provided with a local cache 16, 18, 20. The processors 10, 12, 14 communicate with each other and with a main system memory 24 through a system bus 26. A plurality of input/output devices 28, 30, are also attached to the bus 26. Input/output devices 28, 30 typically do not contain local cache memories.

The problem of maintaining coherency between shared variables stored in the various local caches 16, 18, 20 can arise in several ways. In one, for example, local caches 16 and 18 may each contain a copy of a shared variable from main system memory 24. If local processor 12 updates the value of such shared variable, local cache 18 will be updated as will main system memory 24. In order to ensure coherency of cache 16, some technique must be used for ensuring that the outdated value for such local variable stored in cache 16 is marked as invalid. A similar situation can occur if input/output device 28 writes a value to main memory 24. If such memory location has previously been cached in local cache 20, the current memory value and the value in local cache 20 will not be the same.

In either instance, when a write is made by any device to main memory 24, the address is available to all local caches on system bus 26. This provides each of the local caches 16,18, 20 with an opportunity to monitor bus addresses and invalidate their local cache entries if data is written to an entry which is stored therein.

Referring to Figure 2, one prior art technique for performing bus snooping is illustrated. Two tag RAMs 32, 34 are provided. Only a single data cache RAM (not shown) is provided. Tag RAM 32 is used to monitor the addresses of write operations performed on the system bus 26. Tag RAM 34 is used by the local processor for memory accesses over a local bus 36. A coherency controller 38 communicates with both tag RAMs 32, 34, and ensures that they are consistent. If a write is performed over the system bus 26 to an address which matches an entry in tag RAM 32, such corresponding entry is marked as invalid. Coherency controller 38 recognizes such an event, and updates tag RAM 34 at a time when it is not being accessed by local bus 36. It may be necessary to block out accesses to tag RAM 34 over bus 36 while this is being performed in order to prevent a conflict during access of tag RAM 34. Such a prior art approach is fairly costly and inefficient.

Referring to Figure 3, a preferred system for ensuring cache coherency in a single or multi-processor system is shown. A data cache 40 and cache tag RAM 42 communicate with system bus 26 and local processor 44. Cache controller 46 performs the usual cache control functions found in caches which are suitable for use with single processor systems.

Data cache 40 exchanges data with the local processor 44 and system bus 26 under control of cache controller 46. Various control signals are exchanged by the local processor 44 and cache controller 46. Address and control signals are communicated from local processor 44 to tag RAM 42. Address and control signals are also communicated between tag RAM 42 and system bus 26.

The present invention provides that a control signal SW be communicated to tag RAM 42 from system bus 26 to indicate that a write operation, referred to as a snoop write, is occurring on the system bus 26. A control signal $MTCH_B$ is returned to system bus 26 whenever a system bus address matches an entry in tag RAM 42 during a snoop write operation. The signal $MTCH_B$ can be used as desired by the system in performance of cache control functions.

Tag RAM 42 also passes a signal $MTCH_A$ to cache controller 46. $MTCH_A$ indicates that the memory location currently being addressed by local processor 44 resides in the data cache 40, and that the entry is currently valid. Cache controller 46 then causes the location being accessed by local processor 44 to be read directly from data cache 40. If $MTCH_A$ indicates a miss, cache controller 46 causes the contents of the address location to be accessed from main memory over system bus 26.

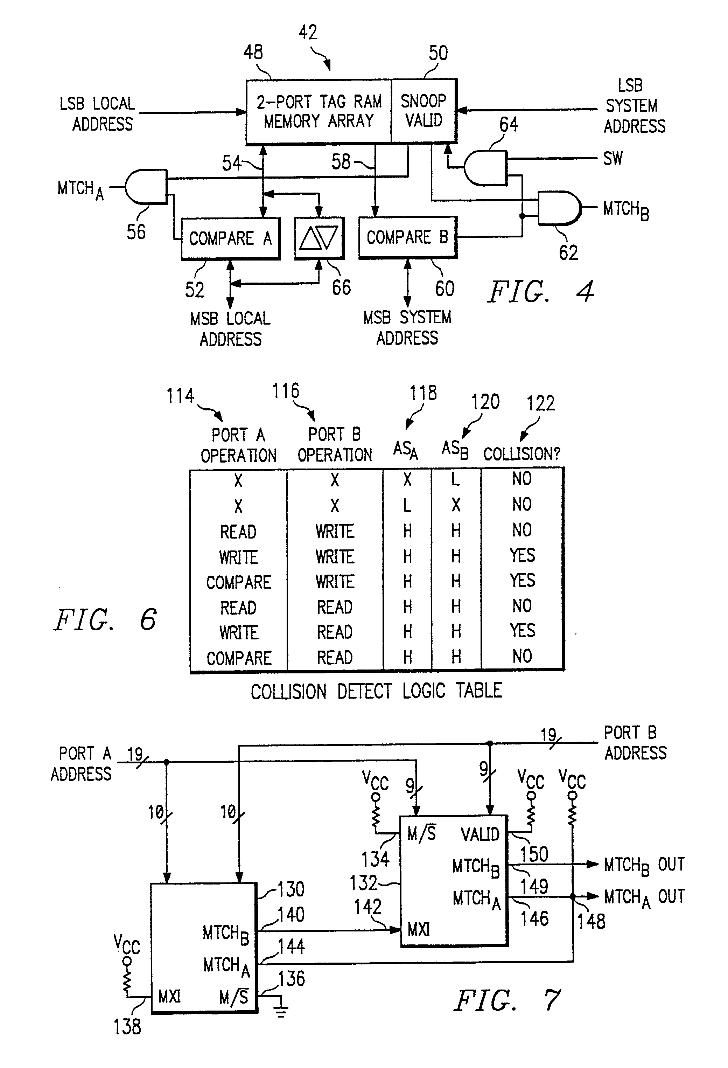

Referring to **Figure 4**, a block diagram of a preferred tag RAM 42 is shown. The tag RAM 42 includes a memory array 48, which is a two-port RAM used for storing the cache tags. A column of snoop valid bits 50 is contained within the memory array 48, with each entry in array 48 having a corresponding snoop valid bit 50.

Memory array 48 can be addressed both by the least significant bits (LSB) of the address from the local processor and the LSB of the system address. The most significant bits (MSB) of the local address are input to a comparator 52 where they are compared with the memory array 48 entry currently selected by the local address LSB, which is available on line 54. A logical one is output from comparator 52 if the selected entry matches the MSB of the local address, and is connected to one input of AND gate 56. The snoop valid bit 50 from the corresponding address is also connected as an input to AND gate 56, and the output of AND gate 56 defines the signal $MTCH_A$. Thus, signal $MTCH_A$ is a logical one, indicating a cache hit, only if the memory array 48 entry indexed by the LSB of the local address matches the MSB of the local address, and the corresponding snoop valid bit 50 for that entry is a logical one.

Memory array 48 can also be addressed by the LSB of the system address. The entry corresponding to such location within the array is output on data line 58 and connected to comparator 60. Comparator 60 compares the entry present on line 58 with the MSB of the system address, generating a logical one if they match. The output of comparator 60 is connected to an input of each of AND gates 62 and 64. The snoop valid bit 50 of the entry index by the LSB of the system address is also connected to AND gate 62. The signal $MTCH_B$ is a logical one only if the selected entry matches the MSB of the system address, and the snoop valid bit 50 has a value of logical one.

The snoop write signal (SW) is connected to a second input of AND gate 64. The output of gate 64 will be a logical one only if the address on the system bus matches an entry in the array 48, and a write operation is being performed on the system bus. In such event, the value stored in the data cache for such entry is now out of date, and must be marked as invalid. When the output of gate 64 is a logical one, the snoop valid bit of the entry indexed by the LSB of the current system address is reset to a logical zero. This will cause any future accesses of this entry by the local processor to indicate a miss, since the output of gate 56 for such entry will now be a logical zero.

Other than the ability to write a zero into the snoop valid bit 50 of an entry, port B is used only for reading the array 48. An exception to this rule is described in connection with **Figure 5**. Port A, accessed by the local processor, is used to write a new value into memory array 48 whenever a cache tag is updated. All reads and writes of memory array 48 are performed through bidirectional buffer 66, which bypasses comparator 52 to communicate data directly between the memory array 48 and the address pins of the device connected to the MSB of the local address. Bidirectional buffer 66 is tristated to a high impedance state whenever a compare operation is being performed on the local address, and the output of comparator 52 is ignored whenever data is being read from or written into memory array 48 to update the cache tag.

Referring to **Figure 5**, a more detailed diagram of a preferred implementation of tag RAM device 42 is shown. A 4K X 10 dual-port memory array 68 contains the actual cache entries. Each entry contains a valid bit 70 within the array 68, and also contains a parity bit 72 and a snoop valid bit 74. The snoop valid bit has the same function as snoop valid bits 50 described in connection with **Figure 4**.

Port A address buffer 76 and port B address buffer 78 are used to access the array 68. The port A address is driven by the signal $INDEX_A$, which comprises the least significant twelve bits of the address generated by the local processor. The port B address is driven by $INDEX_B$, which is composed of the twelve least significant bits from the address present on the system bus. Address strobe signals $AS_A$ and $AS_B$ are used to signal that the addresses on $INDEX_A$ and $INDEX_B$, respectively, are valid.

An entry corresponding to $INDEX_A$ is made available at DATA PORT A 80. This includes the valid bit 70 and parity bit 72 for such entry. The snoop valid bit 74 is made available separately as the value SV on signal line 82, and connected to an input of AND gate 84. Parity of the eleven bit signal is checked in a parity detector 86, which generates a logical one output signal if parity is valid. The output signal is connected to another input of AND gate 84. A $PARITY_A$ output is also available from parity detector 86 to indicate the occurrance of parity errors. As shown in **Figure 5**, a low output indicates a parity error.

The ten bits of the entry not including the parity bit 72 are used as inputs to comparator 88. Comparator 88 generates a logical output which is connected to a third input of AND gate 84, the output of which defines the signal $MTCH_A$.

The preferred embodiment is devised so that the valid bit 70 for each entry can be used as a data bit if desired, making the array 68 function as a 4K X 10 array. If the valid bit 70 is to actually be used as valid bit for cache control purposes, the VALID input signal on line 90 can be connected permanently to a logical one value, and only the nine least significant bits of the system address are used for tag data With this arrangement, the valid bit 70 for an entry must be a logical one for that entry to be valid, and for comparator 88 to indicate a match by generating a logical one. Use of valid bit 70 as a valid bit for each entry allows the tag RAM 42 to be cleared (all cache entries invalidated or flushed) in a single step by simply setting all of the valid bits 70 to zero. This can be done, for example, upon system power up or after certain context switches by the local processor. If it is desired to use the tag RAM 42 as a 4K X 10 memory, the VALID input signal can simply be tied to a tenth bit of the system address.

The device of **Figure 5** is also designed to allow 4 bits from each entry of the array 68 to be used for either status bits or data. The operating mode of the device 42 is determined by the signal $COMP_6$. Six bits of the local address MSB are connected directly to the comparator 88 and to a bi-directional buffer 91. The remaining 4 bits, representing address MSB's or status bits depending on the value of $COMP_6$, are connected to a bidirectional buffer 92. Buffer 91 is connected directly to DATA PORT A 80. Buffer 92 is connected directly to DATA PORT A 80, and to inputs of comparator 88. The routing of signals to and from comparator 88, DATA PORT A 80, and buffer 92 is controlled by the operation being performed on port A of the device 42. Whenever an entry is written into the array 68, parity generator 94 calculates the appropriate value for the parity bit 72, preferably using even parity, and writes that value into the array. Whenever a new value is written into the array 68, the snoop valid bit 74 for that entry is always set to a logical one.

When $COMP_6$ is low, the device 42 operates in the expected manner. All 10 address bits, or 9 address bits and the valid bit, are connected to the comparator 88 during compare cycles. During a write operation, all 10 bits are routed through the buffers 91, 92 to DATA PORT A 80 for writing into the array 68. During read cycles, data is output on all 10 lines through buffers 91, 92.

When $COMP_6$ is high, 4 bits of each entry are used as status bits. They are written and read through buffer 92 in the usual manner during port A write and read cycles. During compare cycles, the 4 status bits are not used for the comparison; instead they are output through the buffer 92 for use by the cache controller. The 4 status bits are ignored by the comparator 88, so that only a 6 bit tag, including the valid bit 70, is provided.

The value of the entry indexed by $INDEX_B$ is made available on DATA PORT B 96. $INDEX_B$ will usually have a different value than $INDEX_A$, but they may be the same. The entry on DATA PORT B 96 also includes the valid bit 70 and parity bit 72. Parity checker 98 determines whether the parity of the entry is correct, and generates a logical output which is connected to an input to AND gate 100. Output signal $PARITY_B$ is provided to indicate parity errors to the system. The ten bits of the entry available at DATA PORT B 96, not including the parity bit 72, are provided as inputs to comparator 102. A ten bit input from the most significant bits of the system address are also provided as inputs to comparator 102. Four bits are used as status bits when $COMP_6$ is high, and are routed through bi-directional buffer 103.

As was the case with port A, the VALID bit can actually be used as a valid bit 70, or may be used as a tenth data bit for the entry. The output of comparator 102 is connected to an input of AND gate 100. In addition, comparator 102 output is also connected to an input of AND gate 104. As was the case with comparator 88, a logical one output is generated only if the two input values match. The snoop valid (SV) bit for the entry selected by $INDEX_B$ is provided from data port B 96 directly as an input to AND gate 100. If all of the inputs to AND gate 100 are a logical one, the signal $MTCH_B$ is a logical one, indicating that an address currently on the system bus has a corresponding entry in this cache tag RAM **42**. MTCH$_B$ indicates such a match regardless of whether the system bus operation is a read or a write operation.

When COMP$_6$ is low, port B performs comparisons only, using 9 or 10 bits depending on the function of the valid bit **70**. When COMP$_6$ is high, 4 bits are used as status bits as described above. These 4 bits are available through buffer **103** for use by the global system. When the device operates in this mode, only **6** bits are compared in comparator **102**. The status bits can only be read from port B; they can be written only through port A as described above.

Various control signals PORT A CONTROL and PORT B CONTROL are provided as inputs to control blocks for port A **106** and port B **108** respectively. For the most part, the precise identity of these control signals is not important to the present invention, and they consist of various enable signals, address strobe (address valid) signals, and so forth. One control signal into the port B control **108** is the snoop write signal SW, which is also connected to AND gate **104**. Port B always compares the entry and indicates a hit or a miss regardless of the state of SW to the PORT B CONTROL 108. When the output of AND gate **104** is a logical one, a matching entry has been found in the tag RAM **42**, and this has happened while a snoop write operation is occurring. This indicates that the corresponding snoop valid bit **74** should be invalidated (ie, set to a logical zero). A master/slave-bar signal is used to determine whether the snoop valid bit **74** will be made functional on the tag RAM **42** and is provided as an input to a mode control block **110**. The output from AND gate **104** is also provided as an entry to mode block **110**. If the master/slave-bar signal is a logical one, indicating that device **42** is a master, the snoop valid bit **74** is utilized as heretofor described. If such signal is a logical zero, indicating that device **42** is a slave device, the snoop valid bit **74** is not utilized. It is never reset to zero, and so always appears valid.

As described above, the signals INDEX$_A$ and INDEX$_B$ will usually have different values. However, they will sometimes have the same value, indicating that the local processor and system bus are both accessing the same entry in the tag RAM table **68**. Since the table **68** is a dual port memory array, this does not cause a problem and the various functions described above behave as expected. However, such a collision could indicate that some special action needs to be taken, inasmuch as the information just obtained by the local processor may not be correct. This can occur because the accesses by the local processor and the system bus are completely asynchronous, so that a system bus access of a particular location can occur at any time during a local processor access of the same location.

Collision detect circuitry **112** is used to determine the occurrence of such a collision, and indicates same by asserting a collision flag CF which can be routed to the local cache controller **46**. Collision detect circuitry **112** uses INDEX$_A$ and INDEX$_B$ as inputs. Also provided as inputs are the address strobe signals AS$_A$ and AS$_B$. Collision detect circuitry **112** also requires a signal indicating the type of operation being performed for each port, such as a read, write, or compare. The SW signal indicates whether a system read or write is being performed on the snoop port, and some of the PORT A CONTROL signals indicate the operation being performed by the local processor.

A potential collision occurs whenever INDEX$_A$ and INDEX$_B$ have the same value. However, not all potential collisions give rise to a situation which may need to be handled specifically as an exception. **Figure 6** gives a table function of a preferred implementation for collision detect circuitry **112**. All entries make the assumption that INDEX$_A$ has the same value as INDEX$_B$.

Column **114** lists the operation currently occurring on port A, while column **116** lists a corresponding operation currently occurring on port B. For all entries, an X indicates a don't care. Column **118** shows the value of AS$_A$, and column **120** shows the value of AS$_B$. Column **122** indicates whether a collision is defined to have occurred which may warrant a specific recovery action by the local processor and cache controller. A YES entry in column **122** indicates that the CF flag of **Figure 5** is set to a value indicating such a collision, while a NO entry in column **122** indicates that the CF flag is not asserted.

A collision can only occur when the address strobes for both ports AS$_A$ and AS$_B$ are asserted (logical high) at the same time. Collisions occur when port B is writing and port A is performing a write or compare, and when port A is writing and a system read is being performed on port B.

The status of SV is not determined by the presence of a collision, but is a function of the port operation and snoop invalid protocol. The SV bit is invalidated during a write on port B only if MTCH$_B$ is true. The SV bit is not invalidated if a miss occurs on port B. If a write operation occurs on both ports simultaneously, and MTCH$_B$ is true, the port B write takes precedence and the SV bit is invalidated. If the port A write operation should extend beyond the end of the port B write operation, evidenced by AS$_A$ remaining high after AS$_B$ returns low, the port A write operation will take effect and SV will again become valid. A collision flag is asserted during a port A write and a port B read to allow the system to be informed that it has read a value which has just been updated. Implementation of a particular system will determine what the system will do in such a circumstance.

Returning to **Figure 5**, comparator **102** is shown as having an enable input on signal line **128** provided by an input signal MXI. This signal can be used to easily provide cache tag entries which are wider than ten bits as shown in **Figure 7**.

When the device 42 is initially powered up, random data will be stored in the array **68** and corresponding parity bits **72** and snoop valid bits **74**. The device **42** can initially be cleared by writing zeros to the valid bits **70**. However, parity will often be incorrect for entries which have not yet been written to since the device **42** was cleared. Therefor, in order to prevent spurious parity error signals as outputs, the parity signal outputs are forced high when both the valid bit **70** and snoop valid bit **74** are logical zeros, and the master/slavebar input is a logical one. This causes the parity output signal to actually signal parity errors only after an entry has actually been written to after a device **42** clear.

Referring to **Figure 7**, two tag RAM devices **130,132** are each as described in connection with **Figure 5**. Device **132** is defined to be the master device, and device **130** is the slave. This is defined by connecting the master/slave-bar input **134** of device **132** to $V_{CC}$ (logical one), with the corresponding input **136** of device **130** connected to ground (logical zero). The MXI **138** input of device **130** is connected to a logical one, and the $MTCH_B$ output **140** of device **130** is connected to MXI input **142** of device **132**. The final $MTCH_B$ output **149** is thus taken from device **132**. The $MTCH_A$ outputs **144, 146** are preferably open collector outputs, and their connection at node **148** provides a wire-AND function. Alternatively, totem-pole outputs can be used with a gate to provide the AND function. The signals $MTCH_A$ OUT and $MTCH_B$ OUT provide the local processor and system bus signals for the combination of the two devices **130,132**.

The VALID inputs **150** for both ports A and B in device **132** are connected to a logical one. This causes the valid bit **70** within device **132** to actually be used as a valid bit. Thus, nine address bits are provided to device **132** from both the port A and port B addresses. For device **130**, the valid bit **70** is used as a data bit, so that ten bits from each of the port A and port B address are provided to device **130** as described in connection with **Figure 5**. Although they are not shown in **Figure 7**, the same value of $INDEX_A$ is provided to both of the devices **130, 132**. Likewise, the same value of $INDEX_B$ is provided to both devices **130, 132**.

When the 4K X 10 device shown in **Figure 5** is used for devices **130, 132**, the result is a 4K X 19 tag RAM with an external valid bit. If larger tag RAM entries are desired, additional slave devices **130** can be connected to master device **132** by ANDing together all of their $MTCH_B$ outputs for connection to the MXI input **142** of device **132**. As is known in the art, an 8K x n or larger tag RAM can be made by providing extra decoding logic to the $INDEX_A$ and $INDEX_B$ signals having more than twelve bits.

The cache tag memory described herein provides a simple technique for invalidating cache tag entries when another device on a system bus writes to a cached memory location This is accomplished by providing a dual port memory with one of the ports having a read only function, and a snoop valid bit which can be written to by the snoop port. Various modifications can of course be made to the described implementation. For example, the size of the cache tag memory array can be changed, and either or both of the valid and parity bits may be left out. Various other features, typical on prior art cache tag RAMs, may be included if desired. The definition of the collision detection circuit can be changed if desired according to particular system requirements.

Although the invention has been described with reference to a specific embodiment, this description is not meant to be construed in a limiting sense. Various modifications of the disclosed embodiment as well as alternative embodiments of the invention will become apparent to persons skilled in the art upon reference to the description of the invention. It is therefore contemplated that the appended claims will cover any such modifications or embodiments that fall within the true scope of the invention.

## Claims

1. A dual-port cache tag memory device, comprising:

a memory array having a plurality of entries;

a first valid bit corresponding to each entry in said array;

means for generating a local cache match signal when both an address generated by a local processor matches an entry in said array and the corresponding first valid bit has a first value; and

means for, when an address generated by a global system matches an entry in said array during a global write operation, setting the first valid bit corresponding to such entry to a second value.

2. The device of Claim 1; further comprising:

a parity bit corresponding to each entry in said array, wherein said parity bit corresponding to an entry must generate valid parity for said match signal generating means to generate a local cache match signal.

3. The device of Claim 2, further comprising:

a parity error output signal for indicating when parity is not valid.

4. The device of Claim 1, further comprising:

means for generating a global cache match signal when both an address generated by the global system matches an entry in said array and the corresponding first valid bit has a first value.

5. The device of Claim 4, wherein a first portion of the global system address is used as an index into said array, and a second portion of the global system address is compared with the indexed entry, and said global match signal generating means generates a match signal only if the indexed entry has the same value as the second address portion.

6. The device of Claim 1, wherein said first valid bit corresponding to an entry in said array is set to the first value when a new value is written to such entry.

7. The device of Claim 1, wherein a first portion of the local processor address is used as an index into said array and a second portion of the local processor address is compared with the indexed entry, and wherein the local processor address matches an entry in said array only if the second address portion has the same value as the indexed entry.

8. The device of Claim 1, further comprising:

collision detect logic for detecting when a first portion of the local processor address and a first portion of the global system address index the same entry in said array.

9. The device of Claim 8, wherein a collision is indicated by said collision detect logic only when the same entry in said array is being indexed while a write is being performed on at least one of the local processor or the global system.

10. The device of Claim 1, further comprising:

a second valid bit corresponding to each entry in said array, wherein the second valid bit for an entry must have a first value to generate a match with either the local processor address or the global system address.

11. The device of Claim 1, wherein said first valid bit setting means comprises:

comparison logic for determining whether the value of an array entry indexed by a first portion of the global system address is the same as a second portion of the global system address, thereby defining a match; and

logic means for setting the first valid bit corresponding to such indexed entry to the second value if a match occurs during a global system write operation.

12. The device of Claim 1, further comprising:

means for making a selected portion of each entry available as status information, wherein a value of the selected portion of an entry corresponding to the local processor address is output to the local processor, and wherein a value of the selected portion of an entry corresponding to the address generated by the global system is output to the global system.

13. A dual-port cache tag memory device, comprising:

a dual-port memory array having a plurality of entries, each entry having a corresponding valid bit;

a first memory port capable of reading from and writing to said array, wherein a first portion of a local address is used as an index to select an entry within said array;

a first comparator connected to said first port for comparing an array entry selected by the first local address portion with a second portion of the local address, and for generating an output signal indicative of a match;

a first logic gate for logically ANDing the first comparator output signal with the valid bit corresponding to the entry selected by the local address first portion;

a second memory port capable of only reading entries from said array, and of writing a value to the valid bit corresponding to an indexed entry, wherein a first portion of a global address is used as an index to select an entry within said array;

a second comparator connected to said second port for comparing an array entry selected by the first global address portion with a second portion of the global address, and for generating an output signal indicative of a match;

a second logic gate for logically ANDing the second comparator output signal with a signal indicating whether a global operation is a read or a write operation, wherein said second logic gate generates an output when the second comparator output signal indicates a match and a global write operation is occurring; and

write logic connected to said second logic gate for setting the valid bit for the entry selected by the global address first portion to a logical zero when said second logic gate generates an output.

14. The device of Claim 13, further comprising:

collision detect circuitry for indicating when both the local address first portion and the global address first portion select the same entry at the same time.

15. The device of Claim 14, wherein a collision is indicated by said collision detect circuitry only when the same entry in said array is being indexed while a write is being performed on at least one of said first or second memory ports.

FIG. 1

FIG. 2
(PRIOR ART)

FIG. 3

FIG. 5

FIG. 4

FIG. 6

COLLISION DETECT LOGIC TABLE

FIG. 7